# EUROPEAN PATENT APPLICATION

(11) **EP 3 614 328 A1**
(43) Date of publication of application: **26.02.2020**
(21) Application number: 19193426.4
(22) Date of filing: 23.08.2019
(51) Int. Cl.: G06Q 30/06, G06Q 30/02

(54) **COMPUTER SYSTEM FOR CONDUCTING A NEW PRODUCT CAMPAIGN AND METHOD**

(30) Priority: 23.08.2018 US 201862721762 P
(71) Applicant: Sangrove, Inc., Lewes, DE 19958 (US)
(72) Inventor: MASHOV, Stan, Brooklyn, NY 11229 (US); ALEXA, Tatiana, Chichester, NY 12416 (US)
(74) Representative: Kuhnen & Wacker Patent- und Rechtsanwaltsbüro PartG mbB

(57) **Abstract**

A computer system, computer implemented method, and computer software program product provide an optimization of the disconnected and fragmented processes currently used in design-to-market industries. Brand companies and retailers, along with other entities, are provided a platform for pooling resources in getting new products to market in an efficient, technologically advanced and secure system using blockchain, smart contract, and/or distributed ledger technology. A computer system, computer implemented method, and computer software program product provide a secure platform for the announcement of a new product offering, and participation by third parties in the new product offering via a computer software based platform or central controller for pooling resources in getting new products to market using electronic accounts.

## Description

### FIELD OF INVENTION

The present invention relates to a computer system for conducting a new product campaign on a networked system and a computer implemented method for a green-light campaign event of a new product. More specifically, the present invention relates to a communication platform allowing multiple entities to participate in a secure manner. More specifically, the present invention provides a business-to-business networked computer software platform utilizing electronic account and/or blockchain-based smart contract technology.

### BACKGROUND OF INVENTION

The design, manufacture, and retail of new products can either be a relatively easy process - for those retailers to directly communicate with the manufacturer - or, more likely, a fragmented multi-process, multi-entity situation. These many processes to get a product from design to market, disadvantageously foster what is at best a cumbersome and sometimes difficult method for those entities who are a part of one or more of the design, manufacture, and retail of new products. This fragmentation causes difficulty in communication - if even possible -- between some of the entities. There is no easy way to define, detail and structure transactions between multiple - sometimes numerous - parties in a run-to-market world. And, for those products that are a part of the never-ending flow, their product lifespan may be counted in months, if not weeks, with many new products in the market which are soon forgotten, sitting on store shelves, turning into dead stock. This has the added disadvantage in that retailers holding dead stock of a manufacturer or supplier on its shelves may be less likely to advance buy more new products and/or may reduce the visibility of that manufacturer's products in the future. So, both current and future new products are affected adversely by this fragmented product to market situation. In addition, there is a distinct lack of sustainability in the current processes, including unnecessary waste and overproduction.

There is a need to level the playing field especially for those newer companies involved at any stage of this product to market situation, such as small retailers that will be given access to much better prices and brands that will be able to offer more products to more retailers. Specifically, there is a need for a solution, such as the present invention described herein, which pools resources by combining orders, easier to track greenlighting of manufacturing and distribution of new products.

### SUMMARY

Embodiments of the present invention provide for a computer system, computer implemented method, and computer readable apparatus or medium having computer software instructions thereon, and computer software program app (application which can run on a portable computing device such as a mobile phone, tablet) for a business-to-business (B2B) platform using blockchain-based smart contract technology to connect brands with retailers and by pooling resources to allow for only the best product designs to go to production stage, with quantities of products to be manufactured defined by measured demand. Embodiments of the present invention utilize an electronic account or wallet to effect the surety-type partial pre-payment and final payment for an order, utilizing distributed ledger technology. Embodiments of the present invention utilize an electronic account or wallet to effect the surety-type partial pre-payment and final payment for an order, and recordation of orders and payments, without utilizing blockchain technology.

Embodiments of the present invention utilize blockchain smart contract technology, which provides for security of records, such that records once in the blockchain cannot be altered in the chain history and blockchain smart contract technology creates a public record thus helping to promote the new product campaign.

Embodiments of the present invention provide for a computer system, computer implemented method, and computer readable apparatus or medium having computer software instructions therein, and computer software program app (application which can run on a portable computing device such as a mobile phone, tablet) comprising one or more of the various features described herein.

Embodiments of the present invention provide for an optimization of the disconnected and fragmented processes currently used in commercial settings. Embodiments of the present invention utilize blockchain based technology to reduce what can be a copious amount of paperwork and eliminates the need for third-party verification. Such embodiments allow for various parties to connect securely to the transaction and optimizes numerous disparate processes, thus providing an easier system to bring new products to consumers. Embodiments of the present invention provide for improved processes which are sustainable and eliminate unnecessary waste and overproduction.

Embodiments of the present invention provide for the brand companies and retailers to pool resources by combining orders. For clarification, a brand company is first a product designer, but can also be the manufacturer or the supplier. Embodiments of the present invention provide a computer software based platform which causes current technology to be improved by providing a more efficient communication system. Effectively, business transactions and processes are made efficient, cohesive, and more transparent than current processes.

Embodiments of the computer software based platform, allow for a retailer to pool resources, act as a business catalyst, and all while using a transaction optimization engine for design-driven markets. This computer software based platform provides a business framework for solving problems facing brands of how to approve for manufacturing or green-light, raise funds for manufacturing, and efficiently deliver to retailers new products in the high-pressure design-driven markets. This business framework allows for multiple business models to be built and supported through the computer software based platform.

Embodiments of the present invention can be used for any design-driven industry needing such efficient processes, including home decor, fashion, consumer electronics, etc. and other markets.

Embodiments of the present invention provide for a platform having modules for integration logic, process logic, decision logic, and big data analytics. Embodiments of the present invention enable transactions between demand-side and supply-side players. Prices of goods offered on the platform are set by the supply-side participants, and there is high sensitivity for a variety of products - the more variety offered on the platform, the better. The network effect is between buyers and sellers - sellers attract buyers, who attract more sellers. Embodiments of the present invention provide for an integral logistical feature in that by aggregating various shipments, generally coming from the same manufacturing region within an allotted time period, can have the added advantage that the shipment is more cost-effective.

Embodiments of the present invention provide a computer software based platform using blockchain-based smart contract technology that connects brands with retailers and manufacturers in order to green-light or approve for manufacturing of new products. Embodiments of the platform addresses the brand's (i.e., the brand company's) need to initially gauge public interest, then efficiently fund, produce, and deliver goods, as well as the retailer's (i.e., the retailer company's) need to obtain new products at a lower price and lower shipment cost. Embodiments of the present invention provide a computer software based Marketplace software platform which provides a technological ecosystem for brand and retailer companies in design driven industries, effectively allowing brand companies to efficiently fund, have produced, and deliver new products.

Embodiments of the present invention provide for a brand company to set up a new product page. The new product page can be set up and is not viewable to anyone except the brand company and the platform. The brand company can then push the soft button on the brand company's user interface associated with the computer software based platform to publish or "launch" the new product page. The new product page includes the various conditions of a pre-sale of the new product, with the understanding that any retailer who commits initially and then withdraws will pay a penalty, and that if a preset threshold amount of new product is not pre-sold or sold, then all offers and acceptances of the new product are null and void. If the threshold amount is pre-sold, then the platform completes the transactions and payments between all participating entities. When the new product page or webpage publishes to the platform, the new product page or webpage (referred to herein interchangeably as product page or product webpage) is visible to the brand that created and published the new product webpage, the computer software based platform administrator, and to all users having retail user interfaces associated with the platform that were selected by the brand to access this new product page or webpage. In an embodiment, all entities registered with the platform can view the published new product page offerings.

In an embodiment, when a brand company creates a new product page, the brand company first creates it in draft mode so that the brand company can edit the information therein and create several such pages or web pages if they have a collection of various items and/or products. The new product page setup appears as a form template with multiple fields. The brand company can also indicate via the new product page setup which retailers - based on region or other criteria - will be able to see the new product page once published; thus, becoming a green-light campaign event (i.e., system or method or process). In an embodiment, once the brand company is finished with entering all of the information on the new product page (or multiple pages for, e.g., a collection), the brand company can publish the draft new product page(s). The draft new product page(s) then becomes "a green-light campaign" event that retailers can see and participate in. In an embodiment, to view the page, users need a retailer interface and to be retailers that the brand company allows to view the published product page and participate in its green-light campaign event for a specific product. The platform administrator and the brand company can see the product page, but other brand companies - even if registered with the platform or central controller - cannot see the product page. The brand company can decide to whom to give viewing rights and/or participation rights to the green-light campaign event (i.e., system or method or process). Such viewing rights and/or participation rights can be stored in the platform database/server(s), and be stored as a part of a user profile, or can be provided by a link to the product page. In an embodiment, agent(s) and/or promoter(s) of the brand company can be given viewing rights and/or participation rights to the green-light campaign event. In an embodiment, users can be granted viewing rights and not participation rights in the green-light campaign event.

In an embodiment, a web interface running inside a user's browser program is used as a GUI. The web interface connects to the platform, including the backend server(s) and can access and transmit all data and commands to and from the server(s). In an embodiment, a mobile App is used as a GUI. In an embodiment, the mobile App connects to the platform, including the backend server(s) and can access and transmit all data and commands to and from the server(s).

In an embodiment, all entities registered with the platform can view the subsequent acceptances/pre-sale orders made by participants of the new product page. In an embodiment, when the new product page publishes to the platform, the brand company effectively deposits a token or currency amount which starts the blockchain. All retailers or other participants who then participate in submitting orders on the new product are included in the block records of the chain, with a surety amount or token or currency being deposited in anticipation of the preset time window closing of the new product offering. In an embodiment, the tokens or surety or currency taken from the brand company and other participants are put in a smart contract, so that when certain preset conditions are met in the smart contract, then the preset order and amounts of payments will occur automatically.

Embodiments of the present invention provide for a machine learning algorithm(s) which matches certain new product pages launched with certain retailers/ agents/ promoters. Embodiments of the present invention provide for a platform executing a machine learning algorithm which tracks a retailer's previous participation(s), records same in one or more databases, and then conducts a search and compare between the new product pages launched and key terms recorded such as the industry type, product type, price point, geography, et al. to determine potential recommendations for the retailer. Embodiments of the present invention provide for a survey for the retailer to complete when registering with the platform, the survey including detailed questions regarding the retailer's preferences which can be used by the machine learning algorithm as a starting base until more data is recorded when the retailer participates in subsequent new product offerings. The algorithm continues to track the retailer's participation and further narrows the new product page recommendations based on same. In an embodiment, the machine learning algorithm weights certain parameters more heavily than others, e.g., geographical location, in determining to which new product pages to alert a retailer.

Embodiments of the present invention utilize dAPPS ("distributed apps") running on the Ethereum™ blockchain or other distributed ledger system that supports smart contracts or dAPPS, such as permissioned or permissionless distributed ledger technology to create secure contracts for each launched product, as well as to provide frictionless billing and payment service. In an embodiment, at the end of each successfully green-lit campaign for a new product, the contract payment in the form of tokens or desired currency is automatically transferred to the brand. No paperwork or billing is involved - everything being in electronic form. In an embodiment, users of the platform of the present invention - i.e., brands, retailers and manufacturers - are able to buy and sell tokens on the platform via an electronic wallet app ("application"). In an embodiment, the tokens can be used within the platform to fund the brands' new product campaigns. In an embodiment, no international billing and currency issues are present when tokens are the currency unit involved. In an embodiment, green-lit products generally have a staggered price scale which depends upon on a total volume of an order. In the present invention, aggregation of orders is possible in the electronic ecosystem created by the platform, and a combined order is expected to have a reduced price given the increased volume of the combined order versus a single retailer order.

Embodiments of the present invention incorporate geotargeting in the computer software based platform interface used by brands to select preferred retailers and delimit geographical areas for their new products. Embodiments of the present invention allow for third parties (i.e., not brand, supplier, manufacturer, retailer) are allowed to participate in the promotion of new products and share in the income from completed contracts.

Embodiments of the present invention provide for a tokenized system or value unit of currency which can be provided and/or generated via a variety of available sources.

Embodiments of the present invention provide for a computer system for conducting a new product campaign on a networked system, including: at least one non-transitory memory; at least one hardware processor associated with a respective at least one non-transitory memory and configured to read instructions from the respective at least one non-transitory memory to cause the system to perform operations comprising: presenting, on a display of a user device, at least one of a first graphical user interface (GUI) and a first webpage; transmitting via at least one of the first GUI and a first webpage, a product webpage and a new product command to a computer software based platform, the product webpage including product data conditions, the new product command configured to initiate a distributed ledger with a first currency amount from a first electronic account; initiating the distributed ledger with the first currency amount by the computer software based platform; storing the webpage product data conditions by the computer software based platform in the respective at least one non-transitory memory associated with the at least one hardware processor; viewing via at least a second GUI the product webpage with the product data conditions stored by the computer software based platform; transmitting via the at least one second GUI an at least one acceptance command to the computer software based platform and at least a second currency amount from at least one second electronic account to the distributed ledger, wherein the product data conditions include at least a minimum threshold order volume and the at least one acceptance command includes at least one confirmed order volume; aggregating by the computer software based platform the at least one confirmed order volume into an aggregated order volume; comparing by the computer software based platform the aggregated order volume with the minimum threshold order volume, wherein when the confirmed order volume exceeds the minimum threshold order volume, then the distributed ledger is closed and at least one third currency amount is withdrawn from the respective at least one second electronic account by the computer software based platform and an order alert notification is transmitted to the first GUI by the computer software based platform.

Embodiments of the present invention provide for a system wherein the product data conditions include a temporal deadline during which the computer software based platform accepts the at least one acceptance command from the at least one second GUI, and the confirmed order volume exceeds the minimum threshold order volume within the temporal deadline. Embodiments of the present invention provide for a system wherein the product data conditions include at least one of: geographical location; minimum threshold order volume, maximum threshold order volume; shipping costs; manufacturing time; and shipping time.

Embodiments of the present invention provide for a system wherein the product data conditions include a temporal deadline during which the computer software based platform accepts the at least one acceptance command from the at least one second GUI, and the confirmed order volume does not exceed the minimum threshold order volume by the temporal deadline, then the computer software based platform transmits a command to end the distributed ledger and to transmit the first currency amount to a platform electronic account associated with the computer software based platform, and the at least one second currency amount to the at least one second electronic account.

Embodiments of the present invention provide for a system further including: comparing by the computer software based platform the aggregated order volume with the maximum threshold order volume, wherein when the confirmed order volume is equal to or greater than the maximum threshold order volume, then the distributed ledger is closed and at least one third currency amount is withdrawn from the respective at least one second electronic account by the computer software based platform and an order alert notification is transmitted to the first GUI by the computer software based platform. Embodiments of the present invention provide for a system further including transmitting a cancellation request of the at least one confirmed order volume via the at least one second GUI before the confirmed order volume exceeds the minimum threshold order volume and transmitting the at least a second currency amount to a computer software based platform account.

Embodiments of the present invention provide for system wherein the new product command includes a transmission command so that an alert is sent to at least one electronic address, the alert including a link to the webpage. Embodiments of the present invention provide for a system wherein the distributed ledger is a smart contract. Embodiments of the present invention provide for a system wherein the distributed ledger is viewable via the first and the at least one second GUIs.

Embodiments of the present invention provide for a system wherein the computer software based platform utilizes a machine learning module to identify and send a webpage alert to specific electronic addresses.

Embodiments of the present invention provide for a system wherein the at least one second GUI is associated with a respective at least one second electronic address and a respective at least one second user profile. Embodiments of the present invention provide for a system wherein the at least one second user profile includes at least one of geographical location, shipping constraints, timing constraints, industry of interest, products of interest, pricing constraints. Embodiments of the present invention provide for a system wherein the at least one second user profile is updated by the computer software based platform with at least one of the confirmed order volume and the product data conditions associated with any acceptance commands transmitted via the respective at least one second GUI, and wherein the computer software based platform utilizes a machine learning module to identify and send a webpage alert to specific electronic addresses based on a comparison of the respective at least one second user profile with the product data conditions. Embodiments of the present invention provide for a system wherein the geographical location is given priority by the machine learning module.

Embodiments of the present invention provide for a computer implemented method for a green-light campaign event of a new product, including: presenting, on a display of a user device, at least one of a first graphical user interface (GUI) and a first webpage; transmitting via at least one of the first GUI and a first webpage, a product webpage and a new product command to a computer software based platform, the product webpage including a new product description and product data conditions, the new product command being configured to initiate a distributed ledger with a first currency amount from a first electronic account; initiating the distributed ledger with the first currency amount by the computer software based platform; storing the product webpage with the product data conditions by the computer software based platform in the respective at least one non-transitory memory associated with the at least one hardware processor; viewing via at least a second GUI the product webpage with the product data conditions stored by the computer software based platform; transmitting via the at least one second GUI an at least one acceptance command to the computer software based platform and at least a second currency amount from at least one second electronic account to the distributed ledger, wherein the product data conditions include at least a minimum threshold order volume and the at least one acceptance command includes at least one confirmed order volume; aggregating by the computer software based platform the at least one confirmed order volume into an aggregated order volume; comparing by the computer software based platform the aggregated order volume with the minimum threshold order volume, wherein when the confirmed order volume exceeds the minimum threshold order volume, then the distributed ledger is closed and at least one third currency amount is withdrawn from the respective at least one second electronic account by the computer software based platform and an order alert notification is transmitted to the first GUI by the computer software based platform.

Embodiments of the present invention provide for a method wherein the product data conditions include a temporal deadline during which the computer software based platform accepts the at least one acceptance command from the at least one second GUI, and the confirmed order volume exceeds the minimum threshold order volume within the temporal deadline.

Embodiments of the present invention provide for a method wherein the product data conditions include a temporal deadline during which the computer based software platform accepts the at least one acceptance command from the at least one second GUI, and the confirmed order volume does not exceed the minimum threshold order volume by the temporal deadline, then the computer software based platform transmits a command to end the distributed ledger and to transmit the first currency amount to a platform electronic account associated with the computer software based platform, and the at least one second currency amount to the at least one second electronic account.

Embodiments of the present invention provide for a method further including: comparing by the computer software based platform the aggregated order volume with the maximum threshold order volume, wherein when the confirmed order volume is equal to or greater than the maximum threshold order volume, then the distributed ledger is closed and at least one third currency amount is withdrawn from the respective at least one second electronic account by the computer software based platform and an order alert notification is transmitted to the first GUI by the computer software based platform.

Embodiments of the present invention provide for a method further including transmitting a cancellation request of the at least one confirmed order volume via the at least one second GUI before the confirmed order volume exceeds the minimum threshold order volume and transmitting the at least a second currency amount to a computer software based platform account.

Embodiments of the present invention provide for a method, system, and computer software program product for conducting a new product campaign on a networked system, including: at least one non-transitory memory; at least one hardware processor associated with a respective at least one non-transitory memory and configured to read instructions from the respective at least one non-transitory memory to cause the system to perform operations comprising: presenting, on a display of a user device, at least one of a first graphical user interface (GUI) and a first webpage; transmitting via at least one of the first GUI and a first webpage, a product webpage and a new product command to a computer software based platform, the product webpage including product data conditions, the product data conditions including at least one of a minimum threshold product volume and a temporal deadline, the new product command configured to send access to the webpage to at least one electronic address; accessing by at least one second GUI the product webpage stored by the computer software based platform; transmitting to the computer software based platform an at least one acceptance command including a respective product volume amount; transmitting a respective first currency amount from an electronic account associated with the respective at least one acceptance command to a platform account; aggregating by the computer software based platform each of the respective product volume amount; comparing the aggregated product volume amount with the minimum threshold product volume, wherein if the aggregated product volume amount exceeds the minimum threshold product volume then the respective product volume amounts are transmitted to the first GUI for order processing and a second currency amount is withdrawn from the electronic account associated with the respective at least one acceptance command by the computer software based platform and stored in the platform account; and wherein if the aggregated product volume amount does not exceed the minimum threshold product volume then an alert is transmitted to the first GUI and a third currency amount is withdrawn from the platform account and transmitted to the electronic account associated with the respective at least one acceptance command by the computer software based platform.

Embodiments of the present invention provide for a minimum threshold order volume before a green-light campaign event (i.e., system or method or process) succeeds with all order(s) accepted by the brand, and proceeds to manufacturing. Embodiments of the present invention provide for when the minimum threshold order volume is not met and/or exceeded, then the green-light campaign event is cancelled and any Surety or initial currency deposit provided and/or charged is returned back to their sources. Embodiments of the present invention provide for when the minimum threshold order volume is met, exceeded and/or not met, a percentage of the Surety or initial currency deposited is deducted and given to at least one of the Brand, platform owner, or other entity.

Embodiments of the present invention provide for more than one level of threshold order volume. Each level of the threshold order volume can have a different price/item, different shipping price, different manufacturer sourcing, different geographical region, and/or different delivery time, or other logistics. In an embodiment, three levels of threshold order volume is provided to retailers who may participate in the new product or green-light campaign event. For example, the three levels can be: (i) a minimum threshold order volume level such that if the aggregated confirmed order volume is less than the minimum, then the green-light campaign event is canceled and any Surety or currency deposit charged is returned back to the respective entities; (ii) a medium threshold order volume level such that a better product price or offering or limited geographical region for delivery or shipping reduction or other beneficial offering is provided if the aggregated confirmed order volume meets or exceeds the medium threshold order volume level; and (iii) a maximum threshold volume level such that an even better product price or offering or limited geographical region for delivery or shipping reduction or other beneficial offering is provided if the aggregated confirmed order volume meets or exceeds the maximum threshold order volume level.

### BRIEF DESCRIPTION OF THE DRAWINGS

FIG. 1 shows an overall diagram of an embodiment of the present invention.
FIG. 2 shows a flowchart of the system platform embodiment of the present invention.
FIG. 3 shows a flowchart of blockchain technology in an embodiment of the present invention.
FIG. 4 shows an example blockchain formation in an embodiment of the present invention.
FIG. 5 shows an example blockchain workflow in an embodiment of the present invention.
FIG. 6 shows an example smart contract workflow in an embodiment of the present invention.
FIG. 7 shows a platform embodiment of the present invention.
FIG. 8 shows an example aggregation software engine in an embodiment of the present invention.
FIG. 9 shows a chart concerning enrollment by a brand co., retailer co. and agent on an embodiment of the platform.
FIG. 10 shows an example graphical user interface in an embodiment of the present invention.
FIG. 11 shows an example system embodiment of the present invention.
FIG. 12 shows a flowchart of a green-light campaign event embodiment of the present invention.
FIG. 13 shows a flowchart of a green-light campaign event embodiment of the present invention.

### DETAILED DESCRIPTION

The various embodiments described and illustrated are for the purpose of showing some example embodiments of the present invention and are not intended to limit in any way the scope of the present invention.

Embodiments of the present invention provide a business-to-business ("B2B") computer software based platform using blockchain-based smart contract technology to connect brands with retailers and pool resources to green-light manufacturing and distribution of new products.

Embodiments of the present invention provide for a set up to allow new users to the platform system to first access a Demo instance of the platform. That is, brands can initially create any Green-light Campaign event (i.e., system or method or process) pages on the Demo instance with the ability to subsequently transfer some or all of those created pages to the Live instance. The Demo instance has linked tutorials to bring users up to speed and allow demonstration and test of any features. The Demo instance includes a machine-learning functionality, and maintains and updates responses to the user based on the inputted information by the user as well as any significant pauses in activity, along with other trackable data.

Descriptions provided herein use a variety of terms, some of which will be used interchangeably - albeit distinct. For example, "brand company" or "brand" or "Brand" is used to describe a maker or design firm/company/individual/entity that creates products. Brand manufactures products either by itself or through one or more contracts with manufacturing companies. For example, "manufacturer" or "Manufacturer" refers to a company that effectively builds the product designed by Brand. Manufacturer is often geographically remote from Brand (e.g., China, Asia). Embodiments of the present invention provide for shipping products directly from Manufacturer's location or the nearest loading port directly to Retailer. In an embodiment, Brand can allow for its respective Manufacturer(s) to have access to the platform through Manufacturer's own interface or a shared interface. For example, "retailer" or "Retailer" refers to a typical retailer with a physically present store and/or an online or virtual retailer. In an embodiment, retailer holds and purchases its own stock or goods to sell or offer for sale. In an embodiment, Retailer orders new product(s) by participating in green-light campaign events (i.e., systems or methods or processes) set up by Brand. And, shipment with a newly made product can come directly from Brand or Brand's Manufacturer. For example, "agent" or "Agent" is similar to a broker that comes with its own book of clients. Agent's clients can be Brands and/or Retailers. In an embodiment, an Agent receives a commission whenever a payment involving Agent's client occurs on the platform. In an embodiment, this commission is automatically sent by the platform or central controller when the payment involving Agent's client occurs to the Agent or Agent's designated proxy. In an embodiment, an Agent can be a "promoter" or "Promoter" who receives an introduction fee from Brand for promoting product(s). For example, a "distributor" or "Distributor" purchases a product in bulk or large quantities from Brand, and sells the product incrementally to Retailer. In an embodiment, the Distributor acts as an Agent, making money off of Distributor's clients (i.e., Brands and/or Retailers) on the platform. In an embodiment, Distributor acts as a Retailer, if the Distributor takes advantage of the platform via which to purchase product. In an embodiment, Distributor acts as a Retailer, if the Distributor takes advantage of the platform via which to purchase product in lesser than the usual minimum volume requirement, as allowed by the platform or green-light campaign event. For example, "green-light campaign" or "Green-light campaign" or "new product campaign" is a mechanism for introducing new products and/or conducting business on the computer software based platform embodiments of the present invention. In an embodiment, the green-light campaign event's (i.e., system's, method's, and/or processes') physical manifestation is a new product page set up which is launched by Brand, the new product page including all terms and details of the new product offering such as, *inter alia*, price per unit, minimum quantity, maximum quantity, shipping costs, timing. Once a new product page is launched on the platform, i.e., allowing others to view and act on the new product offering, a smart contract is created that records actions of participants and waits for the pre-set conditions of the offer to be met. In an embodiment, only retailers can participate in purchasing within green-light campaign events. In an embodiment, agents, promoters, and/or retailers can participate in purchasing within green-light campaign events. In an embodiment, only those entities who have an interface associated with the platform or central controller can participate in purchasing within green-light campaign events. For example, "minimum order quantity" or "Minimum Order Quantity" or "MOQ" specifies the minimum total order volume that has to be met to "green-light" a new product campaign. In an embodiment, orders can be made by a single Retailer or multiple retailers or one or more entities. In an embodiment, Brand can arrange for multiple quantity levels, each quantity level having its own product price. In an embodiment, the larger the order volume, the cheaper the per unit price. In an embodiment, the MOQ is a required term of a green-light campaign events. In an embodiment, MOQ is a first price level, Medium is a second price level, and Maximum is a third price level. For example, "minimum order increment" or "Minimum Order Increment" or "Order Increment" is the minimum volume required for an order that can be placed by Retailer and that corresponds to the minimum shipment that can be made for the respective new product. In an embodiment, the Minimum Order Increment is a term provided on the new product page. In an embodiment, the minimum size of the order matches with the new product's packing. For example, "surety" or "Surety" or "Assurance" refers to an instrument similar to a surety bond. In an embodiment, every green-light campaign event participant, including Brand, pays Surety to indicate a level of seriousness of intentions or commitment. In an embodiment, backing out of a green-light campaign event (i.e., system or method or process) or other similar failure to fulfill a promise / contract, can lead to forfeiture of the Surety. For example, "wallet" or "Wallet" or "Account" refers to simply an account of Brand, Retailer, Agent, Promoter, Distributor, and/or Manufacturer on the computer software based platform or central controller. In an embodiment, a wallet or account can contain crypto currency and/or tokens and/or regular currency. Embodiments of the present invention are not limited to only crypto tokens.

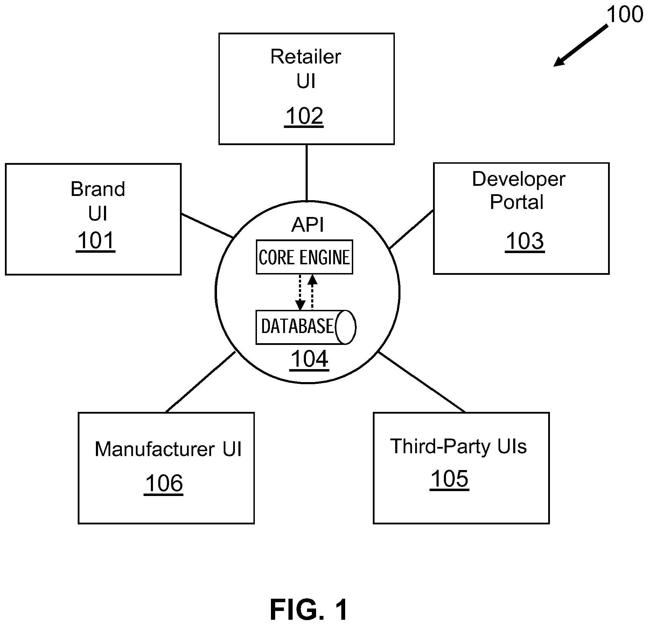

FIG. 1 shows an overall diagram 100 of an embodiment of the present invention. In Fig. 1, the system engine directly or via its API layer (application programming interface) 104 communicates with the brand company via a brand user UI (user interface) 101, with the retail company via a retailer UI 102, and with the developer portal 103 that should allow for easy integration with other systems or platforms. The system's engine 104 is essentially an "aggregation engine" that carries out the green-light campaign event, simplifies logistics and product shipping. The engine 104 is computer software based, and also tracks using at least one database server, the various data entered in the system. In an embodiment, the engine performs data analysis on the tracked and/or stored data and generates business intelligence reports. A user - whether the brand 101 or retailer 102 or another - connects from its UI to the engine via the API, as according to available technological methods. This allows the user to access the platform's services and functionality via its respective Ul.

Embodiments of the platform uses blockchain and smart contract technology in order to optimize all processes related to launching new products and shipment logistics-whenever aggregation is a factor. The platform seamlessly integrates geotargeting functionality used by brands when inviting retailers to participate in a green-light campaign event for a new product. The platform optimizes placement of orders and subsequent aggregation and scheduling of shipping. With the help of Ethereum smart contracts or dAPPS based on other distributed ledger system that supports smart contracts, embodiments of the present invention provide a unique B2B platform that allows brands and retailers to pool resources, green-light or approve new products, as well as aggregate and optimize inventory and shipping logistics.

Embodiments of the present invention provide for an API that provides robust functionality for subscribing to push notifications for updates on the status of brands' Green-light campaign events (i.e., systems or methods or processes) and shipping. In an embodiment, the API can be accessed via a web-based information portal or a third-party software. In an embodiment, the API is configured to publish Business Intelligence (BI) reports based on data stored in the database with product recommendations and inventory and shipment timing and aggregation suggestions based on the machine learning algorithms employed. Functionality and services of the API can be configured via the web-based developer portal. A user - whether retailer or brand company can log into the developer portal and select the services, et al. of interest for the user. API functionality is there for accessing data to feed other systems and platforms, such as an inventory system or a third-party Business Intelligence system.

Embodiments of the present invention provide for a computer software based platform working with its API to allow a brand company to extend its new product campaign by inviting third parties such as distributors, agents or promoters. This allows those third parties to facilitate a green-light campaign event by accessing product data from the database and posting such product data on their systems and platforms. Upon approval by a brand who extended the invitation to a third party, the third party is allowed certain limited rights. Those role-restrictive rights are predetermined via the developer's portal and/or the user's user interface. In an embodiment of the present invention, the platform extends the API services and pushes Business Intelligence and logistical data into third parties' internal systems and/or websites.

From the tremendous growth in consumers' use of e-commerce to the rise of personalized mobile shopping apps and elaborate in-store shopping experiences, retailers are in a state of conventional disruption and vital transformation. Brands and retailers must address these changes head-on to meet consumer needs, stay relevant while remaining profitable. While online shopping is desirable for many shoppers, reportedly 70 to 80 percent of shopping still occurs at bricks and mortar stores, and, reportedly 75% of customers still want to see a product in store. See, Generational Perspective, Alliance Data, 2017. At the same time, physical retail - brick-and-mortar- stores are limited in their inventory and may not carry every size and color for each stocked product. Some innovative brick-and-mortar stores have transformed their stores into experiential showrooms bringing the latest fashion trends to their customers more quickly and in smaller quantities. This generates the same sense of urgency that is created by fast fashion and off-price retailers. Limiting quantities creates a scarcity of product and a sense of excitement and urgency in customer experience. This technique also keeps inventory fresher, as new inventory is cycling through more frequently. Retailers generally fit into three segments: brick-and-mortar (store having physical presence and location, but may also have an online presence), online (e-tailers that primarily sell goods via the Internet and do not have brick-and-mortar locations), and major retailers (department stores present in multiple locations).

As brand companies (i.e., "brands") juggle multiple products and/or transition from one season to the next, brands face several challenges:
1) Product Inventory - The challenge for companies that supply products to retailers is that they must understand and anticipate the changing needs of the retailers and be able to provide the proper amount of merchandise, be nimble enough to supply reorders and not maintain excess inventory on hand at the end of the season.
2) Product Pricing and Customer Acquisition Cost (CAC) - The low wholesale price is paramount for the retailer even for a limited quantity of a product, in turn presenting a challenge to the brands, as they still need to place bulk orders with manufacturers. Consistently low product pricing allows brands to retain their retailers as customers. CAC for brands is extremely high - finding new customers requires regular participation in international trade shows and presence in other such venues, costing time, money, and personnel resources.
3) Product Quantity - Challenges 1) and 2) above can only be addressed effectively if the price of manufacturing the product is low enough to offer low wholesale prices to retailers. However, there are three issues with this: (i) lower prices for a product would require ordering in larger quantities; (ii) that would lead to excess inventory that would take longer to move; and (iii) excess slow moving inventory occupies precious space and generates waste by turning into dead stock. The retailer then does not place small orders due to the new product's high price and the effective lower return on investment, and misses out on potential customer business. An unfortunate side-effect of this is the brand would need to forego ordering smaller quantities of a product that otherwise could be a good revenue source and make available a potentially great product, and missing out on a new client relationship. These challenges are supply-side issues, as each can prevent brands from dealing in small product quantities or offering low wholesale prices to small and medium-sized retailers, putting these retailers at a disadvantage. There are demand-side problems as well.

Challenges faced by retailers include:
1) Space-the lifestyle showroom - upwards of 90% of consumer research starts online. While consumers still end up in a store for the majority of their purchases, the average number of store visits is under two per product search. Brick-and-mortar stores are paying the price of having to maintain a physical location while the online stores, apart from saving on rent and inventory maintenance, often get preferential tax treatment.
2) Product inventory and pricing - Retailers have increasing pressure to continually offer new and unique products to customers at an agreeable price to entice fickle customers who oftentimes live in the near proximity and have a demand to see (and then buy) something new during every store visit. Therefore, new designs effectively motivate consumers for more frequent store visits often searching and comparing products online first. Furthermore, customers expect limited editions of unique and exciting items. Maintaining a constant flow of these items at agreeable prices in small enough quantities to be able to move them quickly can be challenging. There isn't a cost-effective way to order in small quantities at wholesale prices in the current system.
3) In addition, retail stores are no longer a place to stock inventory; they are lifestyle showcases for a brand that allow showrooms to indicate how customers' look and style will transform through their purchase.

There is a one-to-one correspondence between the Supply- and Demand-side problems in the domain of retailers. Accordingly, especially small to medium sized retailers would benefit the most by using the platform embodiments of the present invention, so the retailers can satisfy customers' demand for new and unique items by ordering products directly in smaller quantities while maintaining affordable lower prices in par with bigger in size (chain) stores' retail prices or increase its profitability.

Below are some real-world situations where the aforementioned challenges can manifest, in order to provide context:
1. Brand has a number of new product designs but is not sure which designs retailers would think may become popular with their customers, and preferences of regional retailers and customers may differ.
   a. Brand: How can I determine beforehand which designs are more likely to become bestsellers and focus production on them only?
2. Retailer has already too much of inventory on hand and is reluctant to order merchandise for the upcoming season.
   a. Retailer: How can I minimize dead stock and slow moving inventory and maximize bestsellers?
3. Brand has great many design ideas for new products but insufficient clientele and market exposure.
   a. Brand: How can I acquire more customers, where can I find more clients who appreciate my designs?
4. Retailer is struggling with low profit margins whereby sales revenues mostly benefit distributors and suppliers.
   a. Retailer: How can I go around the distributors?
5. Retailer is expanding and needs fresh ideas for new products.
   a. Retailer: Where can I find newest and hottest products and brands?
6. Brand has a limited budget and needs only bestsellers - her past experience with new products being a hit-and-miss.
   a. Brand: How can I increase my revenue and decrease inventory carrying costs?
7. Retailer has a limited budget and needs only bestsellers - her past experience with ordering new products at large volume being a hit-and-miss.
   a. Retailer: How can I increase my revenue and decrease inventory carrying costs?
8. Retailer orders limited editions and small quantities of products, but his customers also ask for lower prices.
   a. Retailer: How can I get distributor prices but without commitment to deep quantity per SKU?
9. Retailer instead of ordering in bulk a few products for the next season, would rather prefer to order more product varieties in smaller quantities to offer more choices to consumers while maintaining lower prices or increasing profitability.
   a. Retailer: How can I determine before I commit if the product is a bestseller?

Assuming the problems are addressed for the above ad hoc scenarios, there still remains a complex problem of payment friction. The issue of payment for international piecemeal orders (i.e., orders coming from multiple buyers in order to garner wholesale pricing) could be a significant impediment preventing the transaction from ever materializing. Due to the ad hoc nature of such transactions, the typical process of emailing an invoice, followed by check or electronic deposit for payment is impractical in this situation. The online invoice and payment may work, but the overhead time and effort by both parties to handle the payment can be impractical. If the parties are in different countries, it gets even more complicated as currency conversion and taxation issues come into play.

When identifying a counterparty to an international business transaction, the process of evaluating includes reviewing references and also their past dealings to determine payment terms. Especially for an ad hoc, small-size or piecemeal order, this would be impractical. In order to evaluate another party, one has to use online resources, business website, social media to make an educated guess about its reputation and trustworthiness. Both parties need mitigating the risk of dealing with unreliable parties.

In order for the brand to offer a product to the retailer - especially at a competitive RRP (Recommended Retail Price) - the brand has to be able to place an order with a manufacturer for a large enough number of items. This is unlikely for a sole retailer who needs to be agile, maintain lean inventory and move products quickly. Imagine if there was a way for multiple retailers from different geographical areas to pool their resources and fund a new and exciting product in sufficient volume to warrant the lowest price - all the while the size of orders of individual retailers remaining small. With many parties to a single order of a considerable number of items to be manufactured and delivered, blockchain / distributed ledger technology offers an ideal solution.

Embodiments of the present invention provide a platform, i.e., a computer software based platform which pulls together orders from a multitude of localized retailers, helps maintain the high volume of production, and decreases production cost for brands and maintaining lower prices for retailers, despite the small order size of each individual retailer. Business-to-business new product campaigns among other technology tools and business intelligence capabilities of the computer software based platform embodiment can bring higher profits and reduce costs for brands and manufacturers, as well as retailers and their customers. In addition, the platform embodiment can provide logistical support and minimize shipping cost by offering options on aggregating product shipments and ordering additional items from the same manufacturing region - all combined with frictionless payments and with the convenience of a mobile application.

Embodiments of the computer software based platform includes an aggregating engine, a database, an API and a mobile application, plus additional application components to enable access via digital utility tokens or other unit. The platform embodiment is not only a technology but also provides an ecosystem that uses blockchain-based smart contracts to create innovative ways in which brands, manufacturers, retailers and related third-parties can participate in the launch of new products.

Embodiments of a computer software based platform can include:
1) Aggregation engine embodiment: This is the core of the platform which allows a user to green-light and launch newly designed products by amassing the required minimum quantity out of smaller orders from multiple retailers. Another function of the engine is to handle logistics by aggregating shipments. Business Intelligence data can also be provided directly via the interface or via the API from the aggregation engine embodiment.
2) Web and mobile user interfaces embodiment: Web and mobile apps are the primary means for users to organize or participate in green-light campaign events.
3) API-enabled services embodiment: Third-party systems can utilize the API for the API-enabled services of Business Intelligence, inventory management and logistics data feed, and money wiring and foreign exchange services including cryptocurrency exchanges.
4) Partners facilitation embodiment: Not including the brands, manufacturers and retailers that use the platform to green-light and produce new products, partners include any facilitating distributors, agents and promoters.

Embodiments of the platform, for the brand company or seller of new products, provide an efficient way to monetize designs and design ideas that otherwise would remain unfulfilled and makes it easier to get a newly designed product off the ground; still obtain generally bigger-sized orders which lead to lower product prices -wholesale and RRP; acts as a lead generation system for potentially larger project opportunities and lowers CAC; enables better use of time with more focus on design and less on marketing and customer acquisition thus maximizing income potential; and facilitates consolidation of shipments which generally leads to additional orders for products from the same manufacturing region and effectively higher revenues.

Embodiments of the platform, for the retail company or buyer of new products, provide an effective generally higher demand from consumers and higher sales figures due to lower RRP (as discussed above), provides increased profitability due to elimination of the middle-man/distributor while being able to place smaller quantity orders and access better purchasing prices, as well as provides lower inventory and reduced risk of dead stock; releases purchasing budget funds since large inventory purchase is no longer required when a smaller order is desired; offers savings on consolidated shipments; and provides for higher inventory turnover due to smaller quantities of new products that can be ordered more frequently as desired.

Embodiments of the platform, for the brand and retailer, eliminates payment friction and hassle of accounts payable/receivable; facilitates cross-border transactions without currency concerns; and eliminates wasted time since neither would want to forfeit Surety funds escrowed in smart contract for bailing out of a green-light campaign event.

Embodiments of the platform, for the consumer, effectively provide new products which are generally more affordable due to lower RRP, provides more consumer choice - diverse new products and collections can be offered every season; and facilitates more bargain-hunting and exclusive limited editions.

Embodiments of the platform, for the manufacturer, effectively provides increased revenues as more orders come from brands (since such experience is more palatable for varying order sizes), increase in revenues due to economy of scale as average order size for a product increases; acts as a lead generation system for potentially larger project opportunities; and generally generates less waste due to economy of scale for larger-size orders which is more likely to turn into dead stock when ordered by a single retailer and not broken down among multiple retailers. In embodiments of the present invention, the risk of dead stock and wasted resources is shared or leveraged among multiple retailers.

Embodiments of the platform, for the agent and distributor or other third party, facilitates these third party users to monetize existing leads of the brands and retailers; guarantees payment since it is embedded in the smart contract; and may provide a source of new business leads and/or projects.

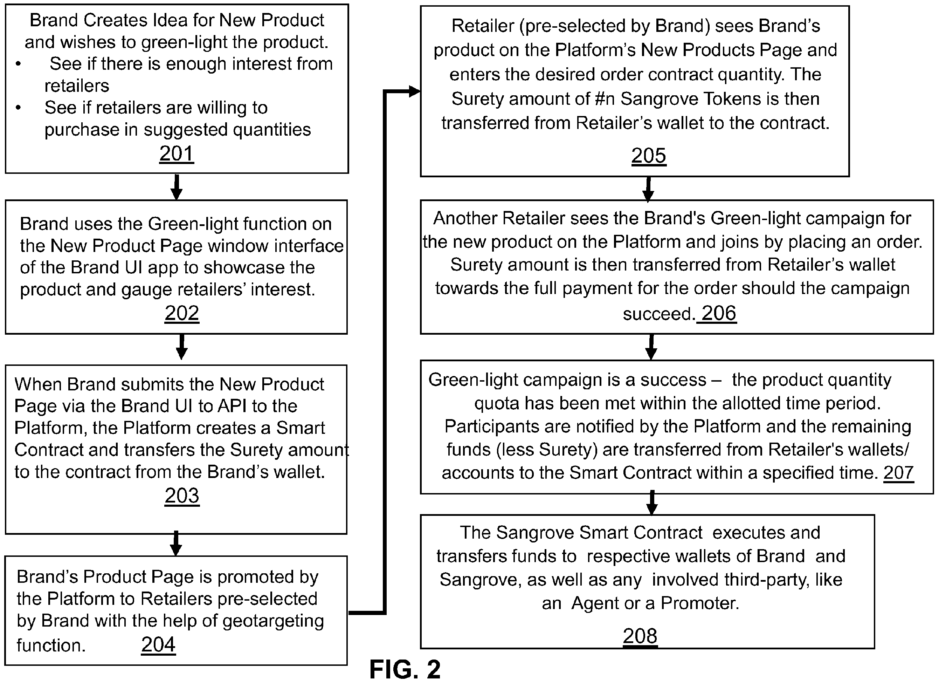

FIG. 2 shows a flowchart of a system platform embodiment of the present invention. In FIG. 2, the brand company (referred to herein as "brand") creates an idea for a new product, and then decides to green-light the product 201. First, the brand company needs to see if there is enough interest from retailers, and second the brand company needs to determine whether retailers are willing to purchase the new product in the offered quantities that make budget-sense for the retail company. The brand company uses the green-light or publish function/ button / command on the New Product Page window interface of the Brand UI app to showcase the product and gauge retailer company's (referred to herein as "retailer,") interest 202. When the brand company submits the new product page via its brand user interface or uploads via API from a third-party software or system to the API of the computer software based platform according to an embodiment of the present invention, the computer software based platform creates a smart contract and transfers the surety amount to the smart contract from the brand company's electronic wallet 203. The brand company's new product page is promoted by the platform to retailers preselected by the brand company 204. The brand company can use a geotargeting function available at the platform which, when selected, allows for the brand company to identify geographical areas of interest, and the platform will then provide a list of known retailers in the identified geographical areas of interest from which the brand can select targets to whom to promote the new product.

The retailer - preselected by the brand company, receives the brand's product information on the platform's "new products page" and enters the desired order contract quantity 205. The surety amount of the required #n tokens is then transferred from the retailer's wallet towards the contract. In an embodiment, this is not a full payment. In an embodiment, another retailer sees the brand company's green-light campaign event for the new product on the platform and also joins by placing an order. The surety amount of the required tokens is transferred from this retailer's electronic wallet towards the full payment for the order, should the campaign succeed 206. In an embodiment, the green-light campaign event is a success which means that the product quantity quota has been met by one or more retailers or others who agreed via the smart contract to follow through with their order of a respective amount of the new product, within the preset allotted time period 207. Winning participants to this deal or contracts are notified by the platform and the remaining funds (the remaining funds is the originally agreed amount minus the surety amount) are transferred from retailers' wallets/electronic accounts to the smart contract, wired or debited in currency directly from retailers' financial account, within a specified time. The smart contract executes and transfers funds to respective wallets of brand company and the company sponsoring the platform, as well as any third party such as an agent or promoter, who receives payment for promotion services 208.

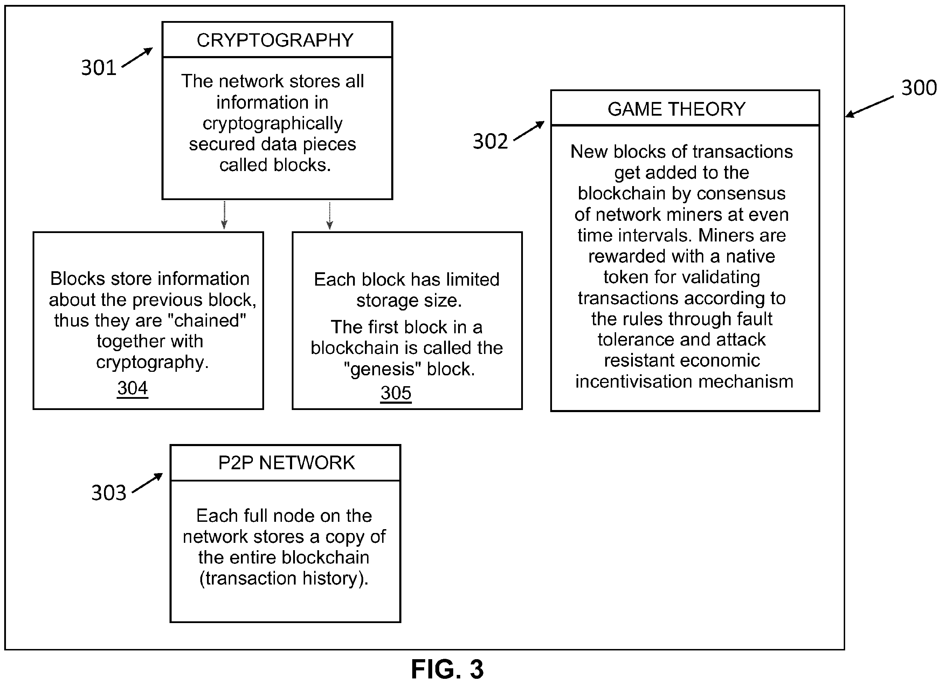

FIG. 3 shows a flowchart of blockchain technology 300 in an embodiment of the present invention. A blockchain is a continuously growing list of records, called blocks, which are linked and secured using cryptography 301. Each block typically contains a hash pointer as a link to a previous block, a timestamp and transaction data. By design, blockchains are inherently resistant to modification of the data. A blockchain can serve as an open, distributed ledger that can record transactions between two parties efficiently and in a verifiable and permanent way.

For use as a distributed ledger, a blockchain is typically managed by a peer-to-peer (P2P) network collectively adhering to a protocol for validating new blocks. Once recorded, the data in any given block cannot be altered retroactively without the alteration of all subsequent blocks, which needs a collusion of the network majority. For example, in FIG. 3, new blocks of transactions are added to the blockchain by consensus of network miners at even time intervals. Miners are then rewarded with a native token for validating transactions according to the rules through fault tolerant and attack resistant economic incentivization mechanisms 302. Each full node on the blockchain network stores a copy of the entire blockchain (i.e., transaction history) 303.

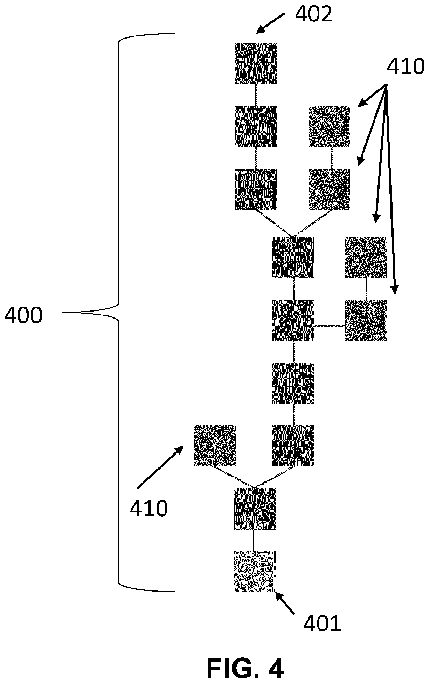

Blockchains are secure by design and are an example of a distributed computing system with high fault tolerance. This makes blockchains highly useful as the foundation of embodiments of the platform where security and transactional integrity are paramount. In FIG. 4, the first block in the blockchain is called the "genesis" block. Each block in a blockchain has limited storage size. Each block stores information about the previous block. The main chain 400 in the blockchain starts with the genesis block 401 and ends with the current block 402. The blocks which tangent off from the main chain are called orphan blocks 410. Those exist outside the main chain.

In an embodiment, Ethereum is used as a basis for part of the present invention, but other permissioned or permissionless distributed ledger system that supports smart contracts or dAPPS with their underlying native digital currencies can be utilized. The smart contracts of the Ethereum platform is a useful mechanism by which the interaction between the parties - including retailer and brand company - by which the interaction between the parties can be recorded as a transactional event with frictionless, cross-border payment. Ethereum is an available, open-source, public, blockchain-based distributed computing platform featuring smart contract (scripting) functionality. Ethereum provides a decentralized Turing-complete virtual machine, the Ethereum Virtual Machine (EVM), which can execute scripts using an international network of public nodes. Ethereum also provides a cryptocurrency token called "ether", which can be transferred between accounts and used to compensate participant nodes for computations performed.

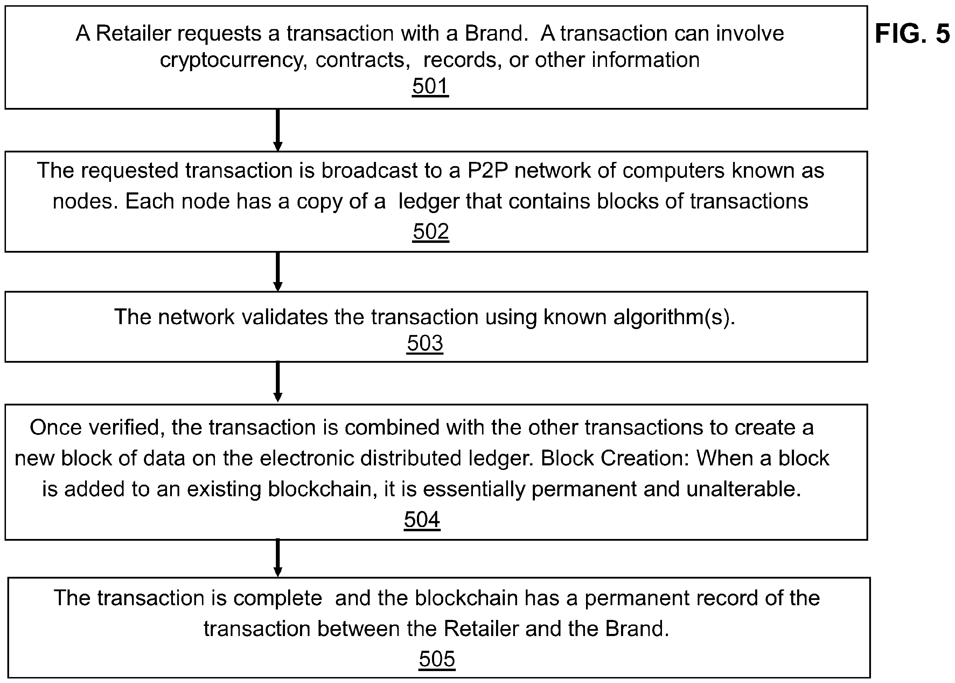

FIG. 5 shows an example blockchain workflow in an embodiment of the present invention. In 501, a retailer requests a transaction with a brand company. A transaction can involve cryptocurrency, contracts, records, or other information. In 502, the requested transaction is broadcast to a P2P network of computers known as nodes. Each node has a copy of a ledger that contains blocks of transactions. In 503, the network validates the transaction using known algorithms. In 504, once verified, the transaction is combined with the other transactions to create a new block of data in the electronic distributed ledger. When a block is added to an existing blockchain, it is essentially permanent and unalterable. In 505, the transaction is deemed complete and the blockchain has a permanent record of the entire transaction between the retailer and the brand company.

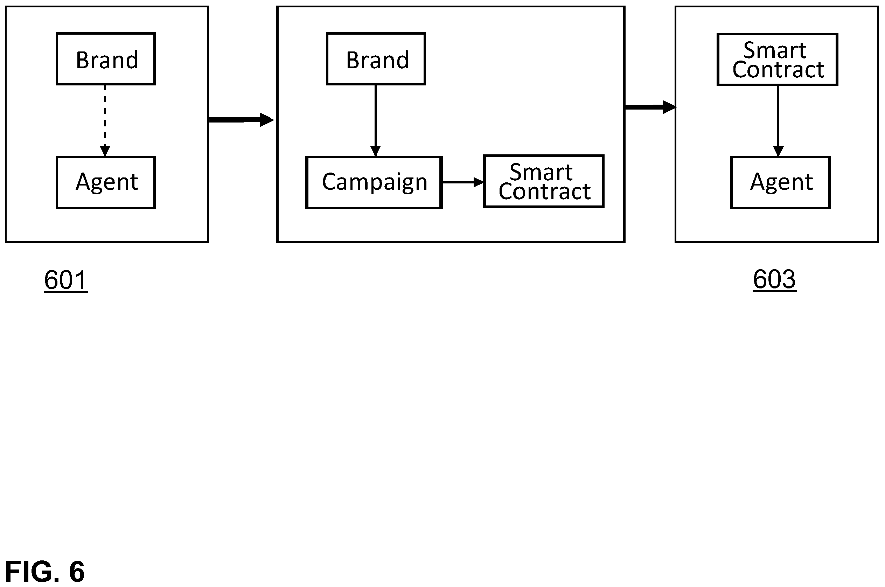

FIG. 6 shows an example smart contract workflow in an embodiment of the present invention. Smart contracts, in addition to that described herein, are computer software programs that run on the Ethereum blockchain and are triggered by transactions or other smart contracts. Embodiments of the platform of the present invention employ Smart Contracts. In embodiments of the present invention, the use of smart contracts eliminates the friction described herein associated with traditional order placement and payment systems, and ensure that all parties involved in a transaction are paid instantly, with irrefutable proof of the transaction.

In FIG. 6, the brand company agrees to pay an Agent for helping promote a successful green-light campaign event in two weeks with the payment due at that time 601. The brand company creates a smart contract and transfers the required amount of Ether (surety amount) from the brand company's wallet/electronic account to the smart contract 602. The smart contract is set up to move tokens or currency to Agent's wallet in the preset time period, provided the necessary minimum to fund the product is raised by the end of the campaign promoted by Agent or facilitated by Agent's clients (retailers induced to participate on the platform). At the end of the preset time period, if the smart contract receives funds and meets the present minimum, i.e., successful campaign, then the tokens or currency is moved from the smart contract to the Agent's electronic wallet or account 603. Smart contracts, for example, are programs that run on the Ethereum blockchain and are triggered by transactions or other smart contracts. Similar smart contracts are available based on other blockchain or distributed ledgers. Embodiments of the present invention can involve one or more electronic accounts.

In an embodiment, e.g., see FIG. 6, for example, Brand agrees to pay an Agent for helping promote a successful green-light campaign event within a preset amount of time, e.g., two weeks, with the payment due at that time 601. Brand creates a new products page or campaign page that creates a smart contract and transfers required #n Tokens (Surety) from Brand's wallet/electronic account to the smart contract. The smart contract is set up to move commissions to Agent's wallet/electronic account in two weeks (as preset), provided the necessary Minimum to fund the new product is raised by the end of the campaign and helped by Agent 602. At the end of the preset time or temporal deadline, e.g., two weeks, the smart contract receives funds from the successful campaign and commission is moved from the smart contract and transmitted to Agent's wallet/electronic account.

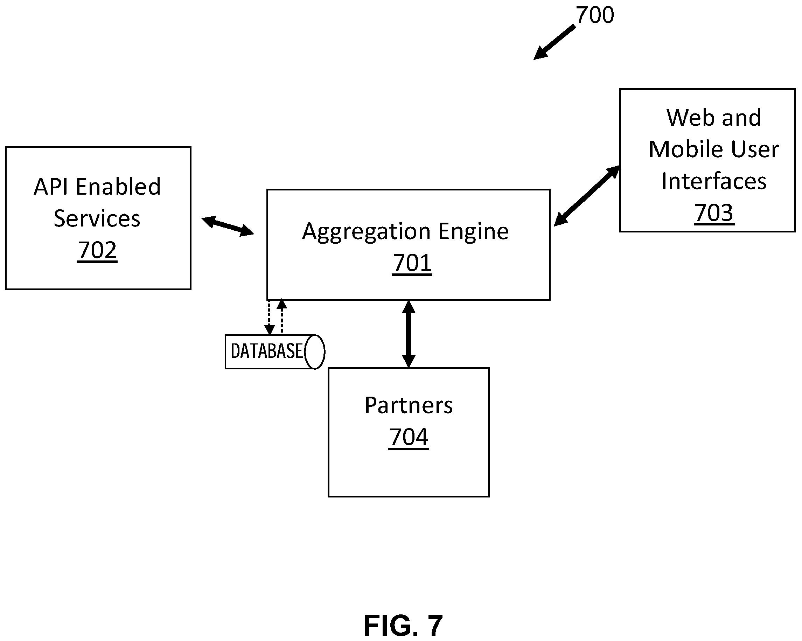

In FIG. 7, an example platform 700 according to an embodiment of the present invention is shown. The platform includes an aggregation engine 701. The aggregation engine connected to the database drives the entire system. The platform also includes API enabled services 702, web and mobile user interfaces 703, and partners 704. The platform is a high-performing system for connecting a variety of users, via a variety of communication protocols, and effects getting new products to market in a secure and technology efficient manner. In an embodiment, the computer software based platform includes multiple servers and/or databases which can be connected in a closed network, wired network, wireless network, via the Internet or in the cloud.

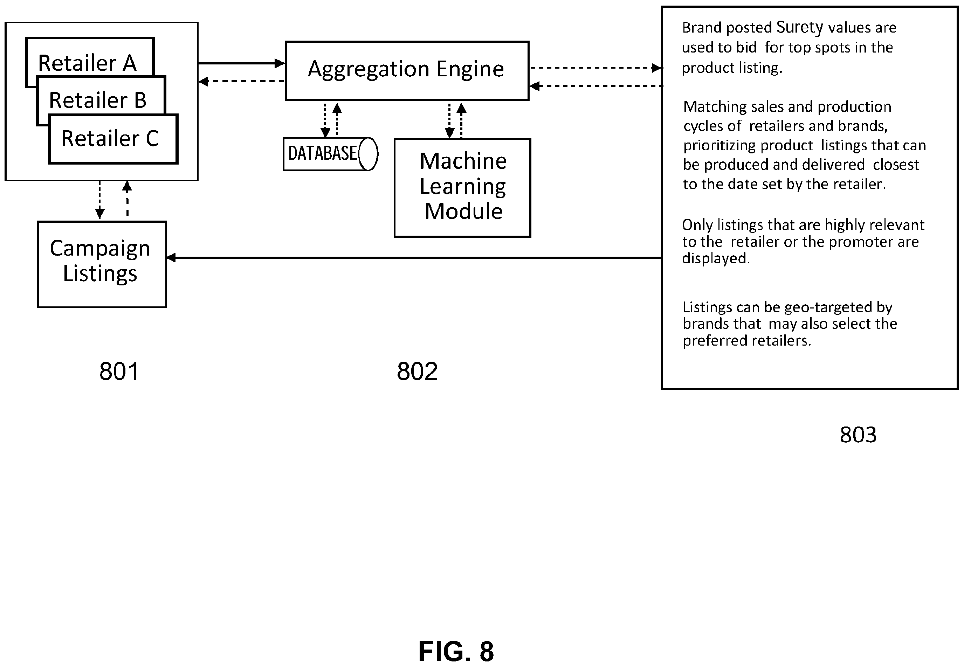

In FIG. 8, an example aggregation engine is shown. The aggregation engine is connected to the database and provides for a brand to conduct green-light campaign events (i.e., systems or methods or processes) for new products by consolidating low volume orders from retailers selected based on a preset criteria; provides for a retailer, in addition to participation in green-light campaign events, receive recommendations on combining and adding to shipments from the same manufacturing region and within a set time period 801. Via the aggregation engine, retailers can search green-light campaign events, receive recommendations based on their history, and more. The aggregation engine takes multiple orders from multiple retailers within a preset time, geographical area, present listing of brand companies, and/or other preset options, in order to reach the minimum quantity threshold within the allotted time period set by the brand 802.

In an embodiment of the aggregation engine, the engine includes a machine learning module 803. The machine learning module updates user profiles with their transaction participation, past search criteria, and other data, and generates product recommendations based on the results. When providing recommendation, the platform uses past purchasing history, product ratings, user profile and past histories of users with similar profiles, brand ratings, product availability timing data, as well as products' geographic location once manufactured (for the purpose of shipping aggregation). As an example, the platform knows that a retailer is expecting a product in X number of weeks to be shipped from port Y while at the same time some other product Z should become available at that same time at that same location - all conforming with the retailer's prior buying or search history, the platform will then make an appropriate recommendation.

In an embodiment, the brand company posts via the platform Surety tokens or currency are firstly a security bond to guarantee the seriousness of brand's intentions to conduct the green-light campaign event with intention to manufacture the product if the campaign is successful, but Surety can also be used to bid for top spots in the product listing. The aggregation engine also determines the matching sales and production cycles of retailers and brands, prioritizing product listings that can be produced and delivered closest to the date set by the retailer. For example, the aggregation engine can be configured to only display listings on the platform dashboard that are highly relevant to the retailer or the promoter or other involved party. For example, the aggregation engine can geotarget the listings by brands that may select the preferred retailers and is coincident in time and in the location of manufacturing or the port of loading of the shipment.

In an embodiment, e.g., as in FIG. 8, retailers search green-light campaign events (i.e., systems or methods or processes) via their respective user interfaces on the computer software based platform. In an embodiment, retailers received recommendations for new product campaigns or green-light campaign events that may be of interest to the retailer. A simple or complex algorithm is employed to determine the recommendations for a retailer, including, e.g., a tracking of previous new product campaigns that retailer has participated in, and matching one or more features of that green-light campaign events/processes with one or more features of the pending green-light campaign events/processes in order to determine the recommendations for the retailer 801. In an embodiment, the aggregation engine combines multiple orders from the multitude of retailers in order to reach the required minimum quantity threshold within the allotted time period set by the brand 802. In an embodiment, a machine learning module of the aggregation engine updates the user profiles and generates product recommendations based on those results, e.g., matching similar type of product or industry. In an embodiment, e.g., as in FIG. 8, Brand-posted Surety values can also be used by retailers to bid for top spots in the product listing 803. In an embodiment, the computer software based platform matches sales and production cycles of retailers and brands, prioritizing product listings that can be produced and delivered closest to the date set by the retailer. In an embodiment, only listings that are determined by the platform to be highly relevant to the retailer or the promoter are displayed. Such determination can be directly from the retailer in completing a survey, or in another manner. In an embodiment, listings can be geo-targeted by brands. In an embodiment, listings can be geo-targeted by brands. In an embodiment, brands select preferred retailers based on where the retailer is located geographically.

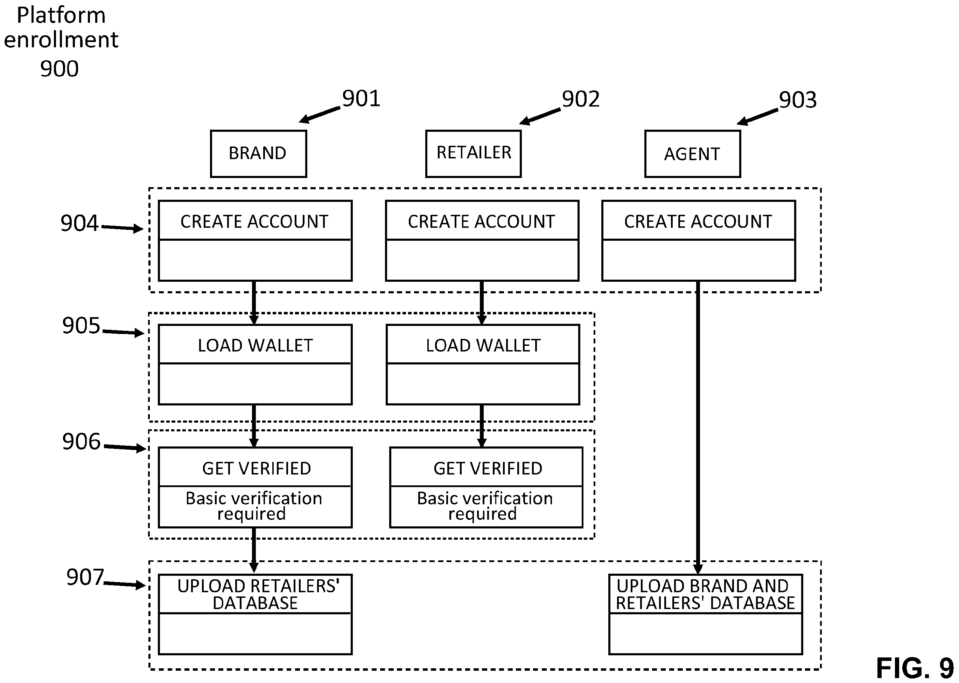

FIG. 9 shows a chart concerning enrollment 900 by a brand company 901, retailer 902 and agent 903 on an embodiment of the platform. The process begins with the brand company 901 launching a green-light campaign event offering new product(s) to retailer(s) 902. Retailer(s) 902 participate in the green-light campaign events organized by the brand company 901. An Agent 903 notifies preferred retailer(s) 902 of the brand company's 901 listings so that the retailer(s) 902 can view and participate in the green-light campaign event. In this embodiment, the platform allows for a brand company to create an account 904, load an associated electronic wallet so that the brand company can launch green-light campaign events, as well as engaging third party services such as the agent 903 promoting the brand company's new product. The brand company is also shown as needing to get verified 906 by the system, and uploading a retailer database so that the brand company can, e.g., search and service potential customers 907. The brand company 901 sets up a green-light campaign event, the retailer 902 participates in the green-light campaign event organized by the brand company, and the agent 903 notifies or promotes preferred retailers about a brand company's new product listings so that the retailers can become aware of them. Agent can create brands and retailers he represents and upload brand and retailer information on the platform.

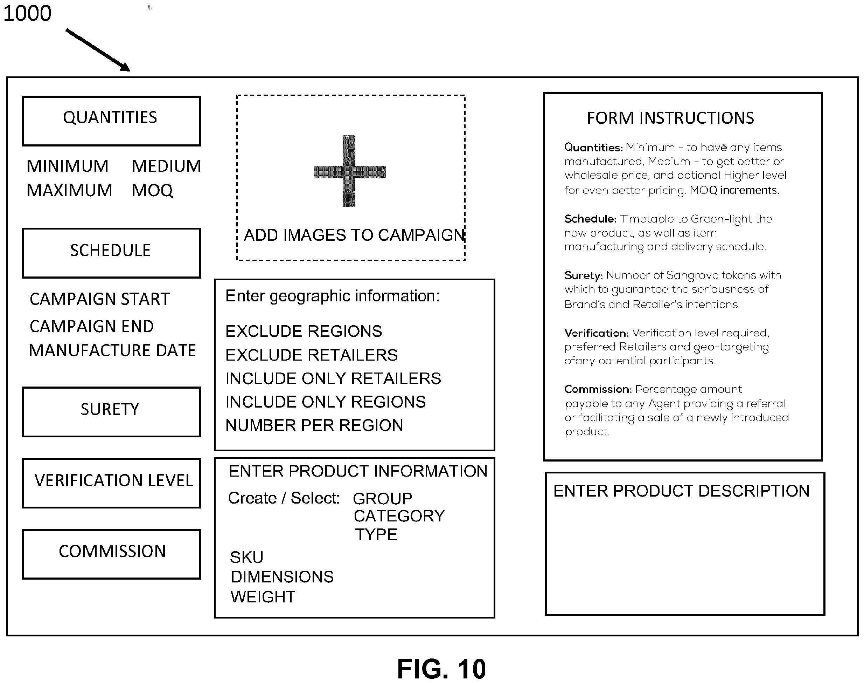

FIG. 10 shows an example graphical user interface 1000 in an embodiment of the present invention. For example, FIG. 10 shows an example new product page to be set up by the brand company. For example, the new product page can specify the minimum purchase amount, maximum amount, or other levels, or the number of items that need to be ordered and manufactured necessary to reach the displayed price level, a medium number of items in order to get a better price for the retailer, and an optional higher level for even better pricing per unit for a specific volume of product. For example, a brand can upload images to the new product page for the campaign. For example, the new product page can specify the timetable to green-light the new product, item manufacturing time, and/or delivery/shipping schedule. For example, the new product page can specify the surety. That is, what number of tokens with which a retailer, brand, or other entity needs to guarantee the seriousness of their intentions. This number can be arbitrary, or set automatically as a percentage of the total order. For example, the new product page can mandate verification of the entity intending to join the smart contract. For example, a verification level can be required if the entity is not of a preset, preferred retailers group, and the geotargeting of any entity may be effected to further assure the transaction is appropriate. For example, a commission amount payable to any Agent for providing a referral or facilitating a sale of a newly introduced product or even an old or stale product that was previously ordered to be manufactured but never paid in full.

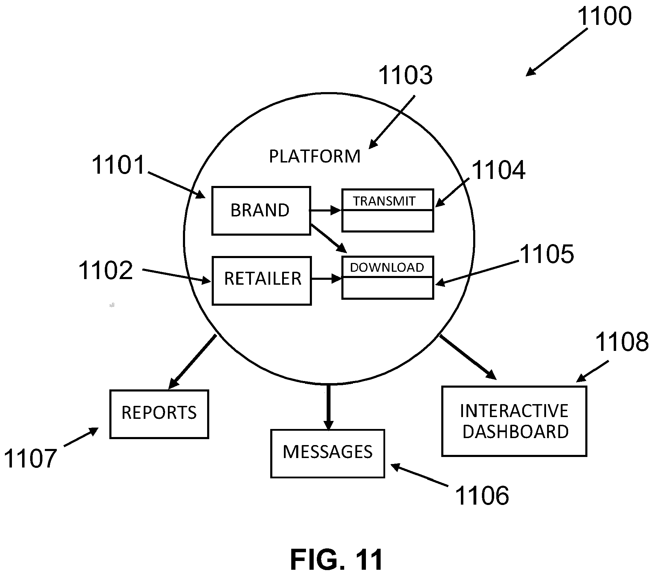

FIG. 11 shows an example system embodiment of the present invention. In FIG. 11, an example system of the present invention is shown in which users, such as retail company 1101 and brand company 1102, communicate via a mobile 1103, handheld or portable processor, tablet, laptop, or desktop, or the like, with the platform. The system works over the Internet, closed-loop communication circuit, or other communication protocol 1104, to allow a user to view and enter into secure contracts via an interactive dashboard 1108, and download needed resources such as a retailers list by geography 1105. Via the platform, a user can generate messages to those who are a part of the chain as well as those who have not yet joined, and generate reports regarding various details tracked and/or recorded by the system 1106, 1107. In an embodiment, the green-light campaign event status and other useful information is updated in near real-time by the platform.

In an embodiment, for example, the business intelligence reports is a data visualization allowing a combination of data and a choice regarding how to display it in order to identify trends. What was once cells upon cells of spreadsheet data has been transformed to engaging charts, graphs, gauges and tables. This makes data more actionable and with interactive dashboards, visuals are not stagnant, and thus potentially valuable to retailers and brand companies to have a feel for certain current trends. A user can click into the visual to drill down into different levels of information. This allows the user to follow a trend and dive deeper into what is driving that performance.

In an embodiment, the platform provides a dashboard and watchlist windows and updates 1108, which can be sent to users via messaging 1107, and the data and statistics for any time period or geographical region or other search criteria can be accessed via reports 1106.

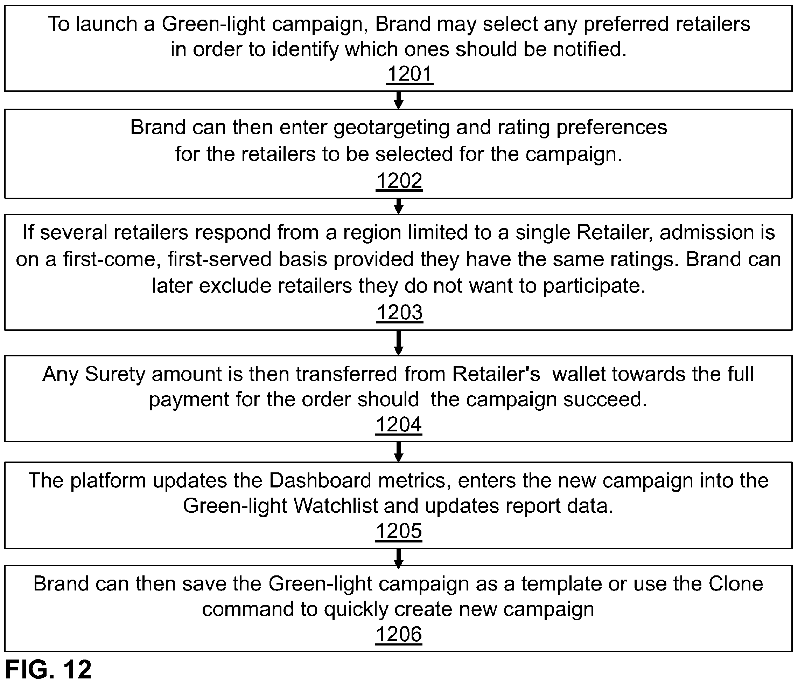

FIG. 12 shows a flowchart of a green-light campaign event embodiment of the present invention. The green-light campaign event involves several stages related to commitment and payment progression of the campaign participants. To launch a green-light campaign event, a brand company may select any preferred retailers to be notified about the brand company's new product page or intended launch 1201. The brand company can then enter geotargeting, rating preferences and/or selection criteria, for the retailers to be selected for the campaign 1202. If several retailers respond from a region limited to a single retailer, admission is on a first-come, first served basis, provided the retailers have the same ratings 1203. The brand company can later exclude retailers that do not want to participate. Any surety amount is then transferred from the retailer's electronic wallet towards the full payment for the order should the campaign succeed 1204. The computer software based platform of the present invention then updates the dashboard metrics, enters the new campaign into the green-light watchlist, and updates report data 1205. The brand company can then save the green-light campaign event as a template or use the clone command coded into the platform functionalities in order to expediently create a new product campaign.

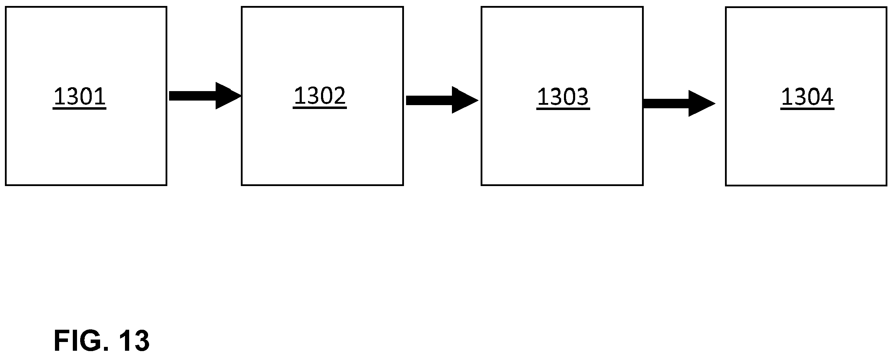

FIG. 13 shows a flowchart of a green-light campaign event embodiment of the present invention. In an embodiment, a first stage 1301 is the Assurance token or initial currency deposit stage. This is the stage where a brand company can gauge interest in a new product. The brand company that launched the campaign, as well as the Retailers participating in the campaign, purchase, e.g., from tokens or currency that at this stage are immediately applied to the campaign as an assurance. This purchase is the participant's pledge of commitment to that specific new product green-light campaign event. If a participant cancels out, then that participant will forego the token pledge already put forth, and that amount will be divided among the remaining participants and the platform or central controller accounts as compensation for the wasted time and effort.

In the new product page, when launching a green-light campaign event, a brand company will have indicated a required amount of token pledge or assurance amount. This amount may vary based on the order size / volume. For example, a bulk-sized order will have a larger assurance amount required (i.e., required token pledge or nonrefundable deposit) compared to a lesser-sized order. Or, for example, an assurance amount requirement may be higher for some retailers based on past history or other known or unknown details. Or, for example, the platform or central controller can offer tokens for promotional purposes and cover the assurance amount for any campaign participant by providing the tokens as a credit.

In an embodiment, a green-light campaign event progress is visually presented, e.g., on a GUI or dashboard, as a bar that represents the Green-light Minimum number of items that the brand company has to sell in order to launch production of the product. The bar is divided into intervals of minimum increments, which is a minimum number of items that can be ordered for the reason of product packing configuration - here represented as intervals. As Retailers place their orders and assurance pledges, the bar fills up incrementally with green (or other) color.

In an embodiment, the brand company can set up more than one price level. Once the Green-light Minimum number has been reached, additional orders may lower the price further given the reduction in price per item as quantity increases - as indicated in the settings and description of the green-light campaign page.

If the Green-light Minimum number has been reached, participants are notified of the success of the 1st stage. The platform generates invoices for retailers as well as notifications that their bank accounts or wallets will be charged as per the 2nd stage, unless they immediately cancel their participation.

If the Green-light Minimum number has not been reached within the time specified, participants are notified of the campaign failure. That means, the green-light campaign event failed to reach Green-light Minimum volume, or minimum order quantity (MOQ) for production, and so the Assurance tokens or initial currency deposit(s) remain in the system to be used in the next green-light campaign event if they were provided by the platform as part of the promotion or if a participant indicates to the platform to keep the tokens to use in the next green-light campaign event. Otherwise, for participants who purchased Assurance tokens, the platform will refund the respective bank accounts. In an embodiment, a percentage or flat fee may be deducted by the platform before refunding the remainder.

In an embodiment, a second stage is the deposit to launch production 1302. This second stage, if successful, will provide Brand with funds sufficient to launch product manufacturing (e.g., 30% of the total production figure). The platform or financial processor charges bank accounts or wallets of the participating Retailers on behalf of the brand company, as well as adds converted into currency Assurance and credits the brand company's account for the total of the deposit figure that the brand company set up on the green-light campaign page minus the platform's and/or financial processor's commission and an Agent's commission, if any. Any financial processing fees are typically charged to Retailers separately. Funds initially accumulate on the financial processor account on behalf of the brand and are deposited to brand company's and/or the manufacturer's bank or wallet account once the 2nd stage is successful.

The brand company, Agent, and the platform accounts receive their respective percentage of the total (e.g. 80/15/5%) if the 2nd stage is successful. The respective percentages are set in advance of the new product launch. For example, the split is 80% for the brand company, 15% for the promotions Agent, and 5% for the platform account. Subsequently, if a brand company set up its manufacturer on the platform, the central controller or platform can transfer funds to Manufacturer's bank account on behalf of the brand company.

In an embodiment, if there is failure at the second stage 1302, that is, for example, if an unacceptable number of orders were canceled by retailer(s) and the necessary volume or Minimum Order Quantity was not reached as a result or order cancellations, or necessary funds could not be drawn from the retailer's bank accounts, the number being predetermined by the brand company or another, then the green-light campaign event fails. The failed retailers' assurance and/or security is used to cover any financial fees and to reimburse the platform owner and remaining participants for their time and effort, with the rest refunded to participants, including platform owner and Agent fees. In an embodiment, the brand company may decide to cover or will cover any deficit towards the manufacturing and may end up with extra product.

In an embodiment, a third stage is the ready to ship stage 1303. At this stage, retailers provide payment for the remainder of the balance due (e.g. 70% of total) and the shipping fees. This stage is initiated strictly by the brand company within the time frame entered on the green-light campaign page.

The platform tracks the calendar date and will send one or more reminders to the brand company that it is time to initiate this stage. The brand company cannot change this date after the launch of the campaign. In an embodiment, once the brand company initiates the third stage, the platform withdraws the remaining portion of the total from retailers' bank accounts. In an embodiment, similar to the second stage payment, the brand company, the manufacturer (if participating on the platform), Agent, and the platform accounts receive their respective percentage of the total. In an embodiment, any financial processing fees are charged to retailers separately. In an embodiment, once the third stage payments are received, the shipment is initiated.

In an embodiment, there can be a failure at the third stage. In an embodiment, if the brand company ends up with extra product, the brand company can sell it to retailers on the platform, either at the original green-light campaign price or at a discount from the original price.

In an embodiment, the fourth stage is delivery 1304. The platform tracks the shipments and updates the respective retailer accounts.

In an embodiment, if at any time a participant claims error, or does not wish to satisfy obligations, the parties can have pre-agreed to a dispute resolution process.

In an embodiment of the present invention, various administrative efforts have been handled in an efficient manner by the platform. For example, a green-light campaign event page acts as an Order Confirmation and a pro forma invoice for any retailer joining the campaign. A purchase order issued by the retailer (i.e., buyer) to the brand company (seller) is created automatically when the retailer enters the green-light campaign event as a participant. In an embodiment, when the green-light campaign event successfully ends, the platform automatically issues an order confirmation and an invoice by the brand company to each participating retailer. All these interconnected documents will show the same green-light campaign event reference number for ease of use and recording.

In an embodiment, a brand company or a third-party logistics provider can create custom shipping rates for different locations according to price and weight breaks and means of shipping. For each shipment, the brand company or a third-party logistics provider can specify shipping zones, price based rates, and weight based rates. For example, the brand company or a third-party logistics provider can create custom shopping zones for countries and regions that the brand company or a third-party logistics provider ships to on a regular basis, including any expected import fees or other fees needed for ensuring delivery. For example, the brand company or a third-party logistics provider can specify shipping rates based on the value of the customer's order. The brand company or a third-party logistics provider can create different rates according to the minimum and maximum order price, and even offer free shipping for orders above a certain volume as a promotional offer. The brand company or a third-party logistics provider can specify shipping rates in sales orders based on the total weight of the items in customer's order. The brand company or a third-party logistics provider can create different rates based on minimum and maximum order weights.

In an embodiment, though the computer software based platform uses tokens internally, the brand company and retailer can perform transactions and generate reports in their preferred currencies, such as Euro, Dollar, Pound. Due to the nature of the business, immediate payments have to be made to order merchandise and/or to pay suppliers or manufacturers.

In an embodiment, token usage would usually be linked to some commercial benefit such as discounts or rebates to promote their use. In an embodiment, other crypto or fiat currencies can be used. For brand companies, the platform may offer signup bonus tokens and various rebates for using certain third-party services. The brand company may receive reduced fees for advertisement and other services through the platform. For retail companies, retailers can participate in green-light campaign events for new products without friction and with the convenience of using a mobile application. Retail companies may receive signup bonus tokens and various rebates for using third-party services. For agents, distributors, and promoters, they can earn tokens for the platform by promoting green-light campaign events and new products. They may be offered the opportunity to be buyer of new products launched via the platform. Partners are companies and entities that provide specialized services to participants and will have the opportunity to earn tokens through providing, for example, such services.

In an embodiment of the present invention, a secure new product design process is provided. Brands spend time and resources researching market trends, traveling to review products in other regions, and developing new product designs. Protecting a uniqueness of a design from copycats in the industry is difficult in design-driven industries where a novel design is paramount, but access to and input from retailers and agents is also necessary to determine if a viable market exists for the new product design. In embodiments, a green-light campaign event is provided in which a smart contract or distributed ledger is utilized when a design of a product is a critical or important feature to the product. The use of the smart contract allows for a secure public record which is time stamped assisting in establishing a priority time and date for a specific product design and establishing an apparent ownership of the Brand posting the new product page on the platform. In an embodiment, when a Brand publishes a new product webpage to the computer software based platform, at the same time a command is sent along with a currency amount to initiate a smart contract or distributed ledger. The new product design offered is secured with the smart contract, including the terms of the product offering such as product information and product data conditions needed to fulfill the smart contract. As described in more detail herein, an executed smart contract provides a secure publicly viewable record having a time stamp and being ineligible for modifications. Accordingly, the aforementioned embodiment of the present invention provides for a secure method, system and process of protecting a product design priority date, while putting potential competitors and copycats on notice about the product design without impeding a Brand's business with retailers regarding the new product. Given that a block in the blockchain or smart contract cannot be subsequently modified, this provides critical proof of design which can be used as a priority document against others intending to seek intellectual property registration of the design they did not create or they attempted to register/protect at a later date. This also provides critical proof of design which can be used in litigation, given the established security of the smart contract.

The various embodiments of the present invention described herein is a software application which is usable on a mobile device, from a computer terminal, or from a barebones or basic technical device which connects to the network for all information and data. Embodiments of the present invention provide for computer-readable medium comprising computer-readable instructions which when implemented on a processing or computer device effects one or more actions. Embodiments of the present invention provide for one or more databases to hold the various information on the users, controllers, circuits, and various electronic devices employed, and data/information received from a variety of sources, servers, networks, manual inputs, et al. and the software system. The information can be stored in a single database or a distributed database structure, or in a variety of types of structured and unstructured locations. The information can be stored in a central server or on a variety of different servers or machines or processors. The information can be accessed by a mobile device using telecommunications, WiFi, Internet, Intranet, or other communications protocol(s).

Features of the various embodiments of above-identified system and method described herein can be combined with and without each other. While the above-described embodiments of the present disclosure are described in detail regarding specific displays, views, methods, and systems, the invention is not limited to thereto. Various equivalent variations or substitutions can be made by one or ordinary skill in the art without departing from the scope of the present disclosure, and are all included within the scope the disclosure of the present invention.

## Claims

1. A computer system for conducting a new product campaign on a networked system, comprising:
at least one non-transitory memory;
at least one hardware processor associated with a respective at least one non-transitory memory and configured to read instructions from the respective at least one non-transitory memory to cause the system to perform operations comprising:
presenting, on a display of a user device, at least one of a first graphical user interface (GUI) and a first webpage;
transmitting via at least one of the first GUI and a first webpage, a product webpage and a new product command to a computer software based platform, the product webpage including product data conditions, the new product command configured to initiate a distributed ledger with a first currency amount from a first electronic account;
initiating the distributed ledger with the first currency amount by the computer software based platform;
storing the webpage product data conditions by the computer software based platform in the respective at least one non-transitory memory associated with the at least one hardware processor;
viewing via at least a second GUI the product webpage with the product data conditions stored by the computer software based platform;
transmitting via the at least one second GUI an at least one acceptance command to the computer software based platform and at least a second currency amount from at least one second electronic account to the distributed ledger, wherein the product data conditions include at least a minimum threshold order volume and the at least one acceptance command includes at least one confirmed order volume;
aggregating by the computer software based platform the at least one confirmed order volume into an aggregated order volume;
comparing by the computer software based platform the aggregated order volume with the minimum threshold order volume, wherein when the confirmed order volume exceeds the minimum threshold order volume, then the distributed ledger is closed and at least one third currency amount is withdrawn from the respective at least one second electronic account by the computer software based platform and an order alert notification is transmitted to the first GUI by the computer software based platform.

2. The system of claim 1, wherein the product data conditions include a temporal deadline during which the computer software based platform accepts the at least one acceptance command from the at least one second GUI, and the confirmed order volume exceeds the minimum threshold order volume within the temporal deadline.

3. The system of claim 1, wherein the product data conditions include at least one of: geographical location; minimum threshold order volume, maximum threshold order volume; shipping costs; manufacturing time; and shipping time.

4. The system of claim 1, wherein the product data conditions include a temporal deadline during which the computer software based platform accepts the at least one acceptance command from the at least one second GUI, and the confirmed order volume does not exceed the minimum threshold order volume by the temporal deadline, then the computer software based platform transmits a command to end the distributed ledger and to transmit the first currency amount to a platform electronic account associated with the computer software based platform, and the at least one second currency amount to the at least one second electronic account.

5. The system of claim 1, further comprising: comparing by the computer software based platform the aggregated order volume with the maximum threshold order volume, wherein when the confirmed order volume is equal to or greater than the maximum threshold order volume, then the distributed ledger is closed and at least one third currency amount is withdrawn from the respective at least one second electronic account by the computer software based platform and an order alert notification is transmitted to the first GUI by the computer software based platform.

6. The system of claim 1, further comprising transmitting a cancellation request of the at least one confirmed order volume via the at least one second GUI before the confirmed order volume exceeds the minimum threshold order volume and transmitting the at least a second currency amount to a computer software based platform account.

7. The system of claim 1, wherein the new product command includes a transmission command so that an alert is sent to at least one electronic address, the alert including a link to the webpage.

8. The system of claim 1, wherein the distributed ledger is a smart contract.

9. The system of claim 1, wherein the distributed ledger is viewable via the first and the at least one second GUIs.

10. The system of claim 1, wherein the computer software based platform utilizes a machine learning module to identify and send a webpage alert to specific electronic addresses.

11. The system of claim 1, wherein the at least one second GUI is associated with a respective at least one second electronic address and a respective at least one second user profile.

12. The system of claim 11, wherein the at least one second user profile includes at least one of geographical location, shipping constraints, timing constraints, industry of interest, products of interest, pricing constraints.

13. The system of claim 12, wherein the at least one second user profile is updated by the computer software based platform with at least one of the confirmed order volume and the product data conditions associated with any acceptance commands transmitted via the respective at least one second GUI, and wherein the computer software based platform utilizes a machine learning module to identify and send a webpage alert to specific electronic addresses based on a comparison of the respective at least one second user profile with the product data conditions.

14. The system of claim 10, wherein the geographical location is given priority by the machine learning module.

15. A computer implemented method for a green-light campaign event of a new product, comprising:
presenting, on a display of a user device, at least one of a first graphical user interface (GUI) and a first webpage;
transmitting via at least one of the first GUI and a first webpage, a product webpage and a new product command to a computer software based platform, the product webpage including a new product description and product data conditions, the new product command being configured to initiate a distributed ledger with a first currency amount from a first electronic account;
initiating the distributed ledger with the first currency amount by the computer software based platform;
storing the product webpage with the product data conditions by the computer software based platform in the respective at least one non-transitory memory associated with the at least one hardware processor;
viewing via at least a second GUI the product webpage with the product data conditions stored by the computer software based platform;
transmitting via the at least one second GUI an at least one acceptance command to the computer software based platform and at least a second currency amount from at least one second electronic account to the distributed ledger, wherein the product data conditions include at least a minimum threshold order volume and the at least one acceptance command includes at least one confirmed order volume;
aggregating by the computer software based platform the at least one confirmed order volume into an aggregated order volume;
comparing by the computer software based platform the aggregated order volume with the minimum threshold order volume, wherein when the confirmed order volume exceeds the minimum threshold order volume, then the distributed ledger is closed and at least one third currency amount is withdrawn from the respective at least one second electronic account by the computer software based platform and an order alert notification is transmitted to the first GUI by the computer software based platform.

16. The method of claim 15, wherein the product data conditions include a temporal deadline during which the computer software based platform accepts the at least one acceptance command from the at least one second GUI, and the confirmed order volume exceeds the minimum threshold order volume within the temporal deadline.

17. The method of claim 15, wherein the product data conditions include a temporal deadline during which the computer based software platform accepts the at least one acceptance command from the at least one second GUI, and the confirmed order volume does not exceed the minimum threshold order volume by the temporal deadline, then the computer software based platform transmits a command to end the distributed ledger and to transmit the first currency amount to a platform electronic account associated with the computer software based platform, and the at least one second currency amount to the at least one second electronic account.

18. The method of claim 15, further comprising: comparing by the computer software based platform the aggregated order volume with the maximum threshold order volume, wherein when the confirmed order volume is equal to or greater than the maximum threshold order volume, then the distributed ledger is closed and at least one third currency amount is withdrawn from the respective at least one second electronic account by the computer software based platform and an order alert notification is transmitted to the first GUI by the computer software based platform.

19. The method of claim 15, further comprising transmitting a cancellation request of the at least one confirmed order volume via the at least one second GUI before the confirmed order volume exceeds the minimum threshold order volume and transmitting the at least a second currency amount to a computer software based platform account.

20. A system for a conducting a new product campaign on a networked system, comprising:
at least one non-transitory memory;
at least one hardware processor associated with a respective at least one non-transitory memory and configured to read instructions from the respective at least one non-transitory memory to cause the system to perform operations comprising:
presenting, on a display of a user device, at least one of a first graphical user interface (GUI) and a first webpage;
transmitting via at least one of the first GUI and a first webpage, a product webpage and a new product command to a computer software based platform, the product webpage including product data conditions, the product data conditions including at least one of a minimum threshold product volume and a temporal deadline, the new product command configured to send access to the webpage to at least one electronic address;
accessing by at least one second GUI the product webpage stored by the computer software based platform;
transmitting to the computer software based platform an at least one acceptance command including a respective product volume amount;
transmitting a respective first currency amount from an electronic account associated with the respective at least one acceptance command to a platform account;
aggregating by the computer software based platform each of the respective product volume amount;
comparing the aggregated product volume amount with the minimum threshold product volume, wherein if the aggregated product volume amount exceeds the minimum threshold product volume then the respective product volume amounts are transmitted to the first GUI for order processing and a second currency amount is withdrawn from the electronic account associated with the respective at least one acceptance command by the computer software based platform and stored in the platform account; and wherein if the aggregated product volume amount does not exceed the minimum threshold product volume then an alert is transmitted to the first GUI and a third currency amount is withdrawn from the platform account and transmitted to the electronic account associated with the respective at least one acceptance command by the computer software based platform.

21. The system of claim 1, further comprising transmitting information including a product design as an entry in the distributed ledger along with the new product command, wherein the entry of the product design provides secure proof of the new product design.
